# EUROPÄISCHE PATENTSCHRIFT

(11) **EP 2 615 433 B1**
(45) Veröffentlichungstag und Bekanntmachung des Hinweises auf die Patenterteilung: **24.06.2015**
(21) Anmeldenummer: 12150759.4
(22) Anmeldetag: 11.01.2012
(51) Int. Cl.: G01G 3/14, G01G 21/24, G01G 23/01

(54) **Vorrichtung und Verfahren zur Justierung des Eckenlastfehlers einer Parallelführung**
Device and method for adjusting the corner load error of a parallel guide
Dispositif et procédé d'ajustement de l'erreur de charge angulaire d'une direction parallèle

(43) Veröffentlichungstag der Anmeldung: 17.07.2013
(73) Patentinhaber: Mettler-Toledo AG, 8606 Greifensee (CH)
(72) Erfinder: Béguin, Christophe, 8620 Wetzikon (CH); Köppel, Thomas, 8618 Oetwil am See (CH); Burkhard, Hans-Rudolf, 8492 Wila (CH)

(56) Entgegenhaltungen:
- DE-U1- 20 217 590
- US-A1- 2010 044 118

## Beschreibung

Die vorliegende Erfindung bezieht sich auf eine Parallelführung, deren beweglicher Parallelschenkel durch einen ersten und einen zweiten Parallellenker an einem feststehenden Parallelschenkel geführt ist. Die Parallelschenkel und die Parallellenker sind durch Dünnstellenbiegelager miteinander verbunden. Ferner ist mindestens eine Justierstelle mit einem Justierbiegelager zwischen einem Dünnstellenbiegelager und einem Parallelschenkel angeordnet, wobei die Justierstelle mit dem ersten Hebelende eines Justierhebels verbunden ist und das Justierbiegelager die Schwenklagerstelle des Justierhebels bildet. Eine von dem beweglichen Parallelschenkel getragene Waagschale nimmt die zu wägende Last auf, deren auf die Waagschale wirkende Kraft gegebenenfalls über einen die Kraft untersetzenden Kraftübertragungshebel an einen Messaufnehmer übertragen wird. Die Parallelführung, das Kraftübertragungssystem und der Messaufnehmer bilden im Wesentlichen die Wägezelle eines gravimetrischen Messinstruments. Es sind im Stand der Technik verschiedene Funktionsprinzipien von Wägezellen bekannt, wie beispielsweise Wägezellen mit Dehnungsmessstreifen, Wägezellen mit Saiten oder EMFC- Wägezellen (Electro Magnetic Force Compensation).

Bei EMFC- Wägezellen wird das Gewicht der Last entweder direkt oder durch einen oder mehrere Kraftübertragungshebel in einen elektromechanischen Messaufnehmer übertragen, welcher ein dem Gewicht der Wägelast entsprechendes elektrisches Signal abgibt, das durch eine Wägeelektronik weiterverarbeitet und zur Anzeige gebracht wird.

Bei Wägezellen mit Dehnungs-Messaufnehmer ist ein Verformungskörper mit Dehnungsmessstreifen versehen. Dieser Verformungskörper wird durch die aufgelegte Last elastisch deformiert. Häufig wird der Verformungskörper als Messparallelogramm beziehungsweise als Parallelführung mit speziell ausgestalteten Biegestellen ausgestaltet, wodurch definierte Deformationsstellen geschaffen werden und in welchen Deformationsstellen beziehungsweise Biegestellen die Dehnungs-Messwertaufnehmer angeordnet sind. Die durch die Verformung des

Deformationskörpers gedehnten oder gestauchten Dehnungs- Messwertaufnehmer weisen einen vergleichsweise zum entspannten Zustand veränderten elektrischen Widerstandswert auf, welcher ein Mass für die aufgelegte Last ist.

Bei Saiten- Wägezellen entspricht der mechanische Aufbau weitgehend den EMFC-Wägezellen, mit dem Unterschied, dass an Stelle eines elektromagnetischen Messaufnehmers ein Schwingsaiten-Messaufnehmer eingesetzt wird. Durch die Last wird eine schwingende Saite gespannt, deren Frequenzänderung wiederum ein Mass für die aufgelegte Last darstellt.

Ein Wesenszug der vorstehend beschriebenen Wägezellen, welcher im übrigen allen Waagen mit geführten (im Unterschied zu hängenden) Waagschalen gemeinsam ist, besteht darin, dass die von der Waagschale an den Messaufnehmer übertragene Gewichtskraft im allgemeinen geringfügig davon abhängt, ob die Wägelast zentrisch auf der Waagschale platziert ist oder aus der Mitte der Waagschale gegen den Rand verschoben ist. Dies kann die unerwünschte Folge haben, dass eine Waage für ein und dieselbe Wägelast verschiedene Gewichtsbeträge anzeigt, je nachdem wo die Wägelast auf der Waagschale platziert wurde. Diese Abweichungen bei exzentrischer Platzierung der Wägelast auf der Waagschale werden gemeinhin als Eckenlastfehler bezeichnet.

Bei einem Messparallelogramm beziehungsweise einer Parallelführung des Waagschalenträgers mittels zweier parallelen, im Wesentlichen horizontalen Parallellenkern, werden Eckenlastfehler vorwiegend dadurch verursacht, dass diese Parallellenker von einer idealen, absoluten Parallelität geringfügig abweichen. Dabei entspricht die relative Grösse des Eckenlastfehlers, das heisst das Verhältnis der beobachteten Gewichtsabweichung zur Grösse des betreffenden Testgewichts etwa der den Fehler verursachenden relativen geometrischen Abweichung. Man unterscheidet zwischen einem Eckenlastfehler in der Längsrichtung und einem Eckenlastfehler in der Querrichtung der Parallelführung, entsprechend der Verschieberichtung des Testgewichts auf der Waagschale in der Eckenlastfehlerprüfung der Waage. Ein Eckenlastfehler in der Längsrichtung kommt daher, dass der vertikale Abstand der Parallellenker an dem zum feststehenden Parallelschenkel verbundenen Ende nicht genau gleich ist wie am andern, mit dem beweglichen Parallelschenkel verbundenen Ende. Ein Eckenlastfehler in der Querrichtung wird dagegen durch eine gegenseitige Verwindung der beiden Parallellenker gegeneinander verursacht, das heisst ein Zustand bei dem der Abstand zwischen den Parallellenkern über die Breite der Parallellenker variiert.

Bei Wägezellen, wie sie beispielsweise in der US 62 32 567 B1 offenbart werden, ist es bekannt, dass Parallelitätsabweichungen der Parallellenker und folglich die damit verbundenen Eckenlastfehler dadurch korrigiert werden können, dass man an den Biegestellen der Parallellenker durch Schleifen oder Feilen Material abträgt. Ein Materialabtrag an der Oberseite hat die Wirkung, dass das effektive Drehzentrum des Biegelagers nach unten versetzt wird, während ein Materialabtrag an der Unterseite der Biegestelle deren effektives Drehzentrum nach oben versetzt.

Eine weitere Lösung für die Eckenlastfehlerkorrektur in einer Wägezelle mit Parallelführung ist beispielsweise aus der WO 2005/031286 ersichtlich, bei welcher das mit dem feststehenden Parallelschenkel verbundene Ende des oberen Parallellenkers mittels einer im monolithischen Materialblock geformten Justiervorrichtung durch Justierschrauben sowohl gehoben oder gesenkt als auch in seiner Querneigung verstellt werden kann, wodurch die Eckenlastfehler in der Längs- und Querrichtung der Wägezelle korrigiert werden können.

Auch die JP 2002365125 A offenbart eine Eckenlastfehlerjustierung mittels Justierhebeln, wobei zwei Justierstellen mit je einem Justierbiegelager zwischen einem Dünnstellenbiegelager und einem Parallelschenkel angeordnet sind und die Justierstelle mit dem ersten Hebelende eines Justierhebels verbunden ist und das Justierbiegelager zugleich die Schwenklagerstelle des Justierhebels bildet.

Die Eckenlastfehlerjustierung durch Abtragen von Material an den Biegelagern einer Parallelführung ist problematisch bei Wägezellen, die für Präzisions- und Analysenwaagen, d.h. für kleine Wägelasten und hohe Auflösungen ausgelegt sind und daher dünne Biegelager aufweisen. Das Abschleifen oder Abfeilen von Material an einem dünnen Biegelager erfordert sehr viel Fingerspitzengefühl, weshalb diese Arbeit meistens manuell ausgeführt wird und dementsprechend kostenintensiv ist.

Ebenfalls nicht vollkommen problemfrei ist eine Eckenlastfehlerjustierung im Sinne der oben erwähnten Beispiele aus der WO 2005/031286 und der JP 2002365125 A, wobei in dem monolithischen Materialblock durch Einschnitte und Bohrungen am feststehenden Parallelogrammschenkel eine Justiervorrichtung ausgebildet ist, welche durch Anziehen oder Lösen von Justierschrauben geringfügig in der Weise elastisch verformt werden kann, dass das mit der Justiervorrichtung verbundene Ende des oberen Parallellenkers sowohl gehoben oder gesenkt als auch in seiner Querneigung verstellt werden kann. Die offenbarte Justiervorrichtung erzeugt bereits bei geringster Verstellung erhebliche Spannungen im Material der Parallelführung. Über längere Zeit kann eine alterungsbedingte Änderung in dieser Eckenlastjustierung durch Relaxation der mittels Justierschrauben in der einen oder andern Richtung elastisch verspannten Materialbereiche eintreten. Reversible, kurzzeitige Änderungen können durch Temperaturschwankungen verursacht werden, wenn der monolithische Materialblock und die Justierschrauben voneinander verschiedene thermische Ausdehnungskoeffizienten haben.

Eine ebenfalls elastische Ecklastjustiermöglichkeit wird in DE 202 17 590 U1 offenbart. Über einen auskragenden Vorsprung wird mittels einer Zugschraube ein Biegemoment auf einen Bereich ausgeübt an dessen Seite einerseits ein Parallellenker über eine Dünnstelle abstützt ist und auf der gegenüberliegenden Seite der auskragende Vorsprung ansetzt. Obwohl durch eine Dimensionierung die Untersetzung zwischen der vertikalen Bewegung des freien Endes des Vorsprungs und der der Abstützstelle des Parallellenkers angepasst werden kann, so muss beachtet werden, dass der Bereich, auf welchen das Biegemoment ausgeübt wird, die horizontalen Kräfte des Parallellenkers aufnehmen kann. Es bleibt als wesentlicher Nachteil dieser Ecklastjustierung, dass der Einstellbereich sehr gering ist. Dadurch muss die Fertigung der Parallelführung entsprechend präzise sein, damit der geringe Einstellbereich ausreicht.

Im Hinblick auf diese unbefriedigenden Aspekte bei der Eckenlastjustierung in Parallelführungen wird in der US2010044118 A1 die Lösung vorgeschlagen, eine Justierstelle mit einem plastisch deformierbaren Justierbiegelager vorzusehen, welches zwecks der Einstellung der Parallelität plastisch deformiert wird. Diese Eckenlastjustierung hat sich in der Praxis ausserordentlich gut bewährt, die damit ausgerüsteten gravimetrischen Messinstrumente weisen keinen temperaturabhängigen Eckenlastfehler mehr auf. Auch über längere Zeiträume auftretende Drifterscheinungen konnten erheblich reduziert werden, so dass die Zeitabstände zwischen zwei Kalibriervorgängen ausgedehnt werden konnten.

Die Einstellung mittels plastischer Deformierung des Justierbiegelagers kann für gravimetrische Messgeräte die eine Auflösung bis zu einem Milligramm aufweisen, ausreichend genau vorgenommen werden. Bei Messgeräten mit noch höherer Auflösung ist jedoch die Einstellbarkeit aufgrund der sich durch Kaltverformung ändernden Materialeigenschaften ungenügend genau erreichbar.

Die Aufgabe der vorliegenden Erfindung besteht darin, die plastisch einstellbare Justierstelle gemäss der US2010044118 A1 dahingehend weiterzuentwickeln, dass eine präzisere Justierung der Parallelführung ermöglicht wird und die positiven Eigenschaften der plastisch einstellbaren Justierstelle beibehalten werden können.

Gelöst wird diese Aufgabe durch eine Parallelführung mit einem beweglichen Parallelschenkel, einem feststehenden Parallelschenkel, einem ersten Parallellenker und einem zweiten Parallellenker, wobei die Parallelschenkel und die Parallellenker durch Dünnstellenbiegelager miteinander verbunden sind. Der bewegliche Parallelschenkel ist durch die Parallellenker am feststehenden Parallelschenkel geführt. Ferner ist mindestens eine Justierstelle mit einem Justierbiegelager zwischen einem Dünnstellenbiegelager und einem Parallelschenkel angeordnet. Dabei spielt es keine Rolle, welches der Dünnstellenbiegelager verstellbar ist. Die Justierstelle ist mit dem ersten Hebelende eines Justierhebels verbunden, wobei das Justierbiegelager auch die Schwenklagerstelle des Justierhebels bildet.

Erfindungsgemäss ist am Justierhebel ein elastischer Bereich ausgebildet, dessen Widerstandsmoment kleiner ist als das Widerstandsmoment des Justierbiegelagers. Dabei entspricht die Momentenachse des Justierbiegelagers der Schwenklagerstelle des Justierhebels.

Das Widerstandsmoment ist in der technischen Mechanik ein gebräuchliches Maß für den Widerstand, den ein Körper mit gegebenem Querschnitt einer Biegung oder einer Torsion entgegensetzt. Bei Kräften die senkrecht zu einer Bezugsachse wirken, will die Kraft den Körper, sofern ein Hebel vorhanden ist, um diese Achse drehen. Wird die Drehung durch eine Einspannung verhindert, entsteht ein Biege- oder Torsionsmoment. Widerstandmomente werden deshalb in Bezug auf die Achsen berechnet, die die Momentenachse darstellen.

Die Größe des Widerstandmomentes ergibt sich allein aus der Geometrie der Querschnittsfläche und ist der Quotient aus dem Flächenträgheitsmoment eines Querschnitts und dem Abstand der Randfaser zur neutralen, spannungsfreien Faser dieses Querschnitts. Als Faser bezeichnet man eine gedachte, parallel zur Mittellängsachse verlaufende Linie. Durch Kenntnis des Widerstandsmoments kann im Rahmen der Balkentheorie erster Ordnung unmittelbar die maximale Biegespannung an der Randfaser und über den gesamten Querschnitt errechnet werden.

Dadurch dass das Widerstandsmoment des elastischen Bereichs kleiner ist als das Widerstandsmoment des Justierbiegelagers, wird bei gegebener Verschiebung des zweiten, freien Justierhebelendes die Grösse des auf das Justierbiegelager, welches die Drehachse beziehungsweise die Schwenklagerstelle des Justierhebels definiert, aufzubringenden Biegemoments durch den elastischen Bereich bestimmt. Je kleiner das Widerstandsmoment des elastischen Bereichs ist, desto kleiner ist das erzeugbare Biegemoment bei gleicher Verschiebung. Oder anders ausgedrückt, je kleiner das Widerstandsmoment des elastischen Bereichs ist, desto mehr Verschiebung des zweiten Hebelendes ist notwendig, um ein Biegemoment einer bestimmten Grösse im Justierbiegelager zu erzeugen. Mittels der Dimensionierung des Widerstandsmomentes des elastischen Bereichs kann eine sehr feine "Untersetzung" beziehungsweise Umwandlung einer Verschiebung des zweiten Hebelendes des Justierhebels in ein Biegemoment am Justierbiegelager erreicht werden. Das Biegemoment am Justierbiegelager führt zu einer elastischen Deformation desselben und damit zu einer Verschiebung des ihm anschliessenden Dünnstellenbiegelagers.

Überraschenderweise konnte festgestellt werden, dass durch die erfindungsgemässe Weiterbildung weder die temperaturabhängigen Eckenlastfehler, noch die über längere Zeiträume auftretende Drift des Wägesignals zugenommen haben. Eine mögliche Erklärung besteht darin, dass sich der Einfluss der materialinternen Spannungen auf temperaturabhängige Eckenlastfehler und die Drift nicht linear, sondern exponentiell zur Reduktion der Spannungen verringert.

Um den Eckenlastfehler in der Längsrichtung einzustellen, reicht ein Justierbereich. Sofern der Eckenlastfehler auch in der Querrichtung einstellbar sein soll, können zumindest die Justierstelle und das Justierbiegelager in zwei nebeneinander angeordnete erste und zweite Justierstellen mit einem ersten und zweiten Justierbiegelager geteilt sein. Die erste Justierstelle weist einen ersten Justierhebel und die zweite Justierstelle einen zweiten Justierhebel auf, welche unabhängig voneinander verstellbar sind. Wie weiter oben beschrieben, kann mittels dieser Ausgestaltung eine vorhandene Verwindung der beiden Parallellenker gegeneinander eliminiert werden.

Um das den beiden Justierstellen anschliessende Dünnstellenbiegelager vor ungewollten Deformationen und Verspannungen zu schützen, kann das Dünnstellenbiegelager zwischen dem Parallellenker und der ersten und zweiten Justierstelle in ein erstes und zweites Dünnstellenbiegelager geteilt sein.

An dieser Stelle ist anzumerken, dass die grobe Justierung der erfindungsgemässen Parallelführung wie in der US 7,851,713 B2 offenbart, mittels einer plastischen Deformation des Justierbiegelagers erfolgen kann und erst danach die Feinjustierung mittels des Justierhebels. Um eine plastische Deformation des Justierbiegelagers zu erzeugen, kann die mindestens eine Justierstelle eine Ansatzstelle zum Ansetzen eines Justierwerkzeugs aufweisen.

Die Verschiebung des zweiten Hebelendes relativ zum anschliessenden Parallelschenkel kann auf verschiedene Weise erreicht werden. In einer ersten Ausführung kann zwischen dem mit der Justierstelle verbundenen Parallelschenkel und dem zweiten Hebelende des Justierhebels ein Stellelement, beispielsweise eine Justierschraube, ein Justierkeil und dergleichen mehr angeordnet sein. Die Feineinstellung der Parallelführung erfolgt mittels des Stellelements, wobei nicht wie in den bekannten Vorrichtungen zur Eckenlastjustierung ein Weg beziehungsweise eine Verschiebung übertragen wird, sondern durch die Verschiebung des zweiten Hebelendes und mittels des elastischen Bereichs ein Biegemoment erzeugt wird, welches auf das Justierbiegelager einwirkt. Das Justierbiegelager wird durch das einwirkende Biegemoment geringfügig elastisch verformt und dadurch die Lage des anschliessenden Dünnstellenbiegelagers relativ zu den anderen Dünnstellenbiegeläger verändert.

Die Stellelemente müssen dieselbe Ausdehnung haben wie der Rest der Zelle, sonst resultiert eine relativ zur Zelle temperaturabhängige Änderung in der Längsachse. Zudem muss damit gerechnet werden das die Schraubverbindung gewissen Alterungsmechanismen unterworfen sind was zu einer unkontrollierten Veränderung der Eckenlast führt.

Anstelle der ersten Ausführung mit einem Stellelement, kann in einer zweiten Ausführung an dem mit der Justierstelle verbundenen Parallelschenkel ein Einstellbereich mit einem plastisch deformierbaren Einstellbiegelager ausgebildet sein. Der Einstellbereich ist mittels eines Koppelelementes mit dem zweiten Hebelende des Justierhebels verbunden. Wenn nun das Einstellbiegelager plastisch deformiert wird, erfolgt eine Verschiebung des Koppelelements relativ zum Parallelschenkel und damit auch eine Verschiebung des zweiten Hebelendes. Diese zweite Ausführung besitzt den grossen Vorteil, bei Temperaturänderungen keinen Einfluss auf die Eckenlast zu haben, da die Ausführung aus demselben Materialblock wie die Zelle gefertigt wird.

Nach der plastischen Verformung des Einstellbiegelagers bleibt aufgrund des elastisch deformierten, elastischen Bereiches ein Biegemoment bestehen, welches gleichermassen auf das Justierbiegelager und das Einstellbiegelager wirkt. Sofern die Widerstandsmomente des Einstellbiegelagers und des Justierbiegelagers gleich gross sind, ist für deren plastische und elastische Verformung dasselbe Biegemoment aufzuwenden. Aufgrund der identischen Widerstandsmomente treten an beiden auch gleich grosse Biegespannungen auf. Wenn diese Biegespannungen infolge Kriechens des Werkstoffes abgebaut werden, bleibt dennoch die eingestellte Position erhalten, vorausgesetzt dass das Justierbiegelager und das Einstellbiegelager aus demselben Werkstoff gefertigt sind.

Die Parallelführung kann auch Teil einer Kraftübertragungsvorrichtung sein. Die Kraftübertragungsvorrichtung weist nebst der Parallelführung mindestens ein am feststehenden Bereich schwenkbar gelagerter Kraftübertragungshebel auf, dessen erster Hebelarm mit dem beweglichen Parallelschenkel kraftübertragend verbunden ist. Der zweite Hebelarm ist mit einem Messaufnehmer kraftübertragend verbunden. Selbstverständlich können zwischen dem beweglichen Parallelschenkel und dem Messaufnehmer auch mehrere, der Übertragung und Untersetzung der Kraft dienenden Hebel angeordnet sein.

Ferner kann die Kraftübertragungsvorrichtung mittels Bohren, Fräsen, Funkenerodieren und dergleichen mehr aus einem einzigen Stück herausgearbeitet sein, so dass die Parallelführung und der mindestens eine Kraftübertragungshebel monolithisch ausgebildet sind. Alternativ zur monolithischen Ausführung kann die Kraftübertragungsvorrichtung auch aus mehreren Einzelteilen hergestellt werden.

Um eine Wägezelle zu erhalten, wird die Parallelführung oder die Kraftübertragungsvorrichtung mit einem Messaufnehmer ergänzt. Sofern die Wägezelle eine Kraftübertragungsvorrichtung mit einem Hebel aufweist, ist der zweite Hebelarm des mindestens einen Hebels kraftübertragend mit dem Messaufnehmer verbunden.

Die Wägezelle ist Teil eines gravimetrischen Messinstruments, beispielsweise einer Waage, einer Dosiervorrichtung, einer Titrationsvorrichtung, eines Massenkomparators, eines gravimetrischen Feuchtigkeitsmessgeräts und dergleichen mehr.

Zur Justierung der Parallelführung beziehungsweise eines gravimetrischen Messinstruments, kann das nachfolgende Verfahren angewendet werden.

Zuerst werden der Längseckenlastfehler und gegebenenfalls der Quereckenlastfehler gemessen. Anschliessend wird ein Justierwerkzeug an der Ansatzstelle der mindestens einen Justierstelle angesetzt. Mittels des Justierwerkzeugs wird durch plastische Deformation des mindestens einen Justierbiegelagers eine Vorjustierung der Parallelführung vorgenommen.

Nach Abschluss der Vorjustierung wird das Justierwerkzeug entfernt und mittels des am zweiten Hebelende des Justierhebels angreifenden Stellelements oder des Einstellbereichs eine Feinjustierung der Parallelführung vorgenommen.

Einzelheiten der erfindungsgemässen Parallelführung sowie des Verfahrens zu deren Justierung werden im Folgenden anhand der Zeichnungen gemäss nachstehender Übersicht näher erläutert.
- Figur 1: zeigt ein gravimetrisches Messinstrument im Aufriss mit einer Wägezelle, die eine erfindungsgemässe Kraftübertragungsvorrichtung aufweist;
- Figur 2A: zeigt im Aufriss die Kraftübertragungsvorrichtung der Wägezelle aus der Figur 1 mit einer erfindungsgemässen Parallelführung in einer ersten Ausführung;
- Figur 2B: zeigt einen Schnitt in der Ebene X-X der in der Figur 2A dargestellten Kraftübertragungsvorrichtung;
- Figur 2C: zeigt die seitliche Ansicht in Blickrichtung Z der in der Figur 2A dargestellten Kraftübertragungsvorrichtung;
- Figur 3A: zeigt eine perspektivische Ansicht mit Blickrichtung auf die Oberseite und Seite einer Kraftübertragungsvorrichtung mit einer erfindungsgemässen Parallelführung in einer zweiten Ausführung;
- Figur 3B: zeigt die perspektivische Ansicht mit Blickrichtung auf die Unterseite und Seite der in der Figur 3A dargestellten Kraftübertragungsvorrichtung,
- Figur 3C: zeigt die Ansicht mit Blickrichtung auf die Unterseite der in der Figur 3A dargestellten Kraftübertragungsvorrichtung.

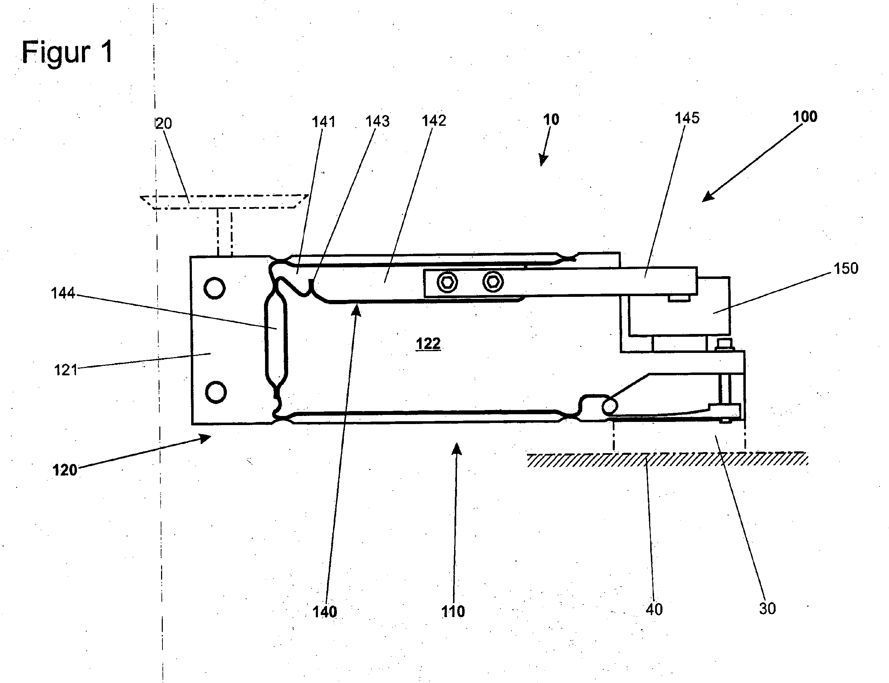

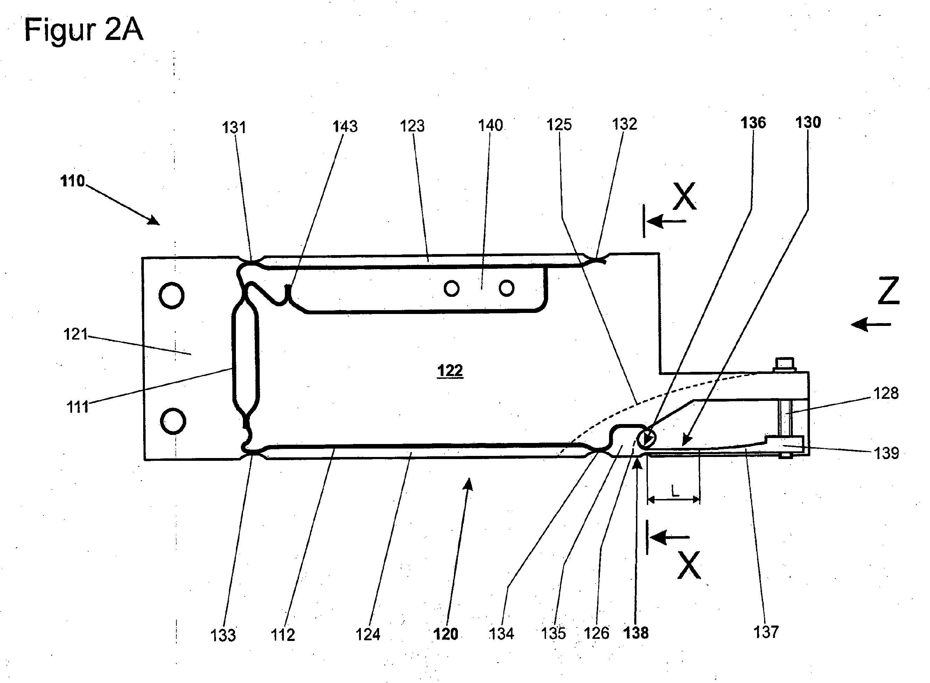

Die Figur 1 zeigt im Aufriss eine Wägezelle 100 mit einer Kraftübertragungsvorrichtung 110, die eine erfindungsgemässe Parallelführung 120 beinhaltet. Die Wägezelle 100 ist Teil eines gravimetrischen Messinstruments 10, dessen weitere Teile in strichpunktierter Linie nur teilweise dargestellt sind und die wesentlichen Anschlussstellen zur Wägezelle 100 aufweisen. Die erste Anschlussstelle ist der Lastaufnehmer 20, welcher kraftübertragend mit einem beweglichen Parallelschenkel 121 der Parallelführung 120 verbunden ist. Die zweite Anschlussstelle ist eine gehäusefeste Abstützung 30, welche einen feststehenden Parallelschenkel 122 der Parallelführung 120 gegen den Untergrund 40 abstützt. Die Parallelführung 120, insbesondere deren erfindungsgemässe Justierstelle wird weiter unten detailliert in Zusammenhang mit den Figuren 2A bis 2C beschrieben.

Die Kraftübertragungsvorrichtung 110 weist ferner einen Kraftübertragungshebel 140 auf, welcher mittels des Hebelschwenklagers 143 am feststehenden Parallelschenkel 122 schwenkbar gelagert ist. Der erste Hebelarm 141 des Kraftübertragungshebels 140 ist in kraftübertragender Weise mittels eines Koppelelements 144 mit dem beweglichen Parallelschenkel 121 verbunden. Mit dem zweiten Hebelarm 142 des Kraftübertragungshebels 140 ist eine Hebelarmverlängerung 145 fest verbunden, welche an ihrem, dem zweiten Hebelarmende 142 abgewandten Ende mit der beweglichen Seite eines Messaufnehmers 150 verbunden ist. Die bewegliche Seite des Messaufnehmers 150 welche hier nicht sichtbar dargestellt ist, ist beispielsweise die Magnetspule eines EMFC- Messaufnehmers. Die feststehende Seite des Messaufnehmers 150, bei EMFC- Messaufnehmern üblicherweise der Permanentmagnet, ist mit dem feststehenden Parallelschenkel 122 fest verbunden.

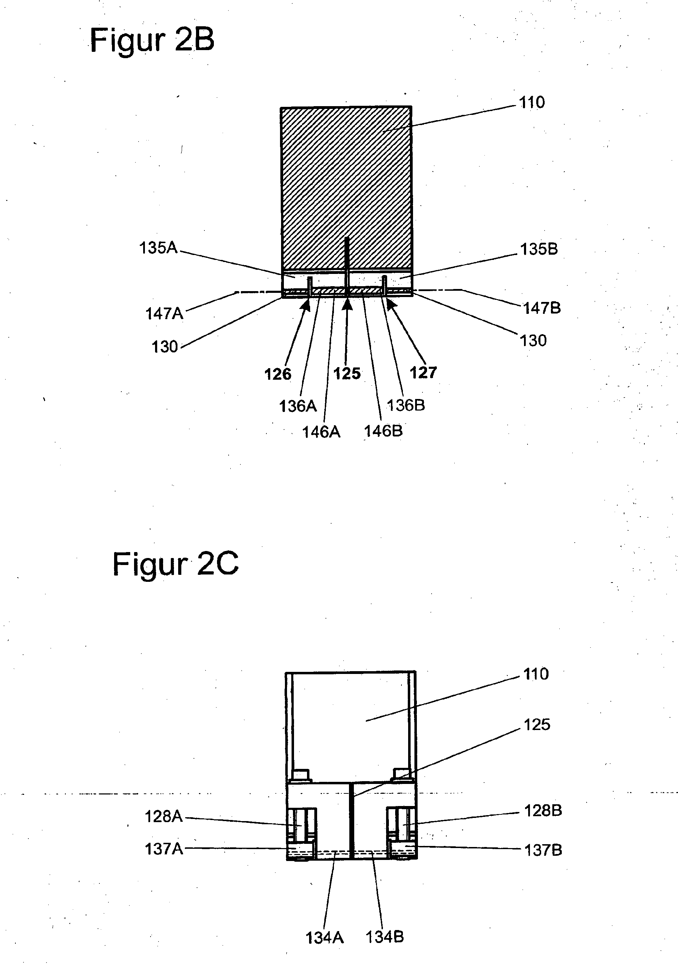

Figur 2A zeigt eine Kraftübertragungsvorrichtung 110 mit einer erfindungsgemässen Parallelführung 120 im Aufriss in einer ersten Ausführung. Diese entspricht genau der Kraftübertragungsvorrichtung 110 aus der Figur 1, weshalb dieselben Bezugszeichen verwendet werden. Da in der Figur 2A keine Anbauten dargestellt sind, ist der Aufbau und die Funktionsweise der Kraftübertragungsvorrichtung 110 besser ersichtlich. Die Kraftübertragungsvorrichtung 110 ist aus einem einzigen Materialblock gefertigt, wobei die einzelnen Bauteile mittels Material entfernenden Arbeitsoperationen wie Sägen, Fräsen, Bohren, Funkenerodieren und dergleichen mehr erzeugt wurden. Mittels zweier Trennschnitte 111, 112 ist der Kraftübertragungshebel 140, dessen Hebelschwenklager 143, der bewegliche Parallelschenkel 121, ein erster Parallellenker 123, ein zweiter Parallellenker 124, vier Dünnstellenbiegelager 131, 132, 133, 134 und eine Justierstelle 135 nahezu vollständig vom feststehenden Parallelschenkel 122 abgetrennt. Nahezu deshalb, weil das erste Dünnstellenbiegelager 131 den beweglichen Parallelschenkel 121 mit dem ersten Parallellenker 123 und das zweite Dünnstellenbiegelager 132 den ersten Parallellenker 123 mit dem feststehenden Parallelschenkel 122 monolithisch verbindet. Der bewegliche Parallelschenkel 121 ist ferner durch das dritte Dünnstellenbiegelager 133 mit dem zweiten Parallellenker 124 und dieser durch das vierte Dünnstellenbiegelager 134 mit der Justierstelle 135 verbunden. Die Justierstelle 135 ist durch ein Justierbiegelager 136 mit dem feststehenden Parallelschenkel 122 verbunden und nur teilweise sichtbar, da dem Justierbiegelager 136 vorgelagert, ein Justierhebel 137 angeordnet ist. Das Justierbiegelager 136 ist in durchtrennter Ausführung als erstes und zweites Justierbiegelager 136A, 136B vorhanden, dies ist besser in der Figur 2B einsehbar, da diese den Querschnitt der Kraftübertragungsvorrichtung 110 in der Schnittebene X-X zeigt.

Die Kraftübertragungsvorrichtung 110 wird parallel zur Zeichnungsebene der Figur 2A durch drei Schnitte teilweise durchsetzt, wobei einer der Schnitte, als Mittelschnitt 125 bezeichnet, das Justierbiegelager 136, die Justierstelle 135 und das vierte Dünnstellenbiegelager 134 mittig durchtrennt. Diese Durchtrennung, in den Figuren 2B und 2C besser ersichtlich, trennt die vorgenannten Bereiche in ein erstes Justierbiegelager 136A, in eine erste Justierstelle 135A und in ein erstes Dünnstellenbiegelager 134A sowie in ein zweites Justierbiegelager 136B, in eine zweite Justierstelle 135B und in ein zweites Dünnstellenbiegelager 134B und ermöglicht die Einstellung und Korrektur des Eckenlastfehlers auch in der Querrichtung der Parallelführung 120. In der Figur 2A ist das Ende des Mittelschnitts 125 in unterbrochener Linie dargestellt, in den Figuren 2B und 2C ist der Mittelschnitt 125 als tiefer, in der Mitte angeordneter Einschnitt erkennbar. Die andern beiden Schnitte sind die Hebeltrennschnitte 126, 127, welche die beidseitig vorhandenen Justierhebel 137A, 137B vom feststehenden Parallelschenkel 122 abtrennen. Aufgrund dieser Abtrennung mittels der Hebeltrennschnitte 126 127, wird das erste Justierbiegelager 136A, zugleich zum ersten Schwenklager 146A des ersten Justierhebels 137A und das zweite Justierbiegelager 136B, zum zweiten Schwenklager 146B des zweiten Justierhebels 137B. Beide Justierstellen schwenken um die jeweilige Momentenachse ihres Justierbiegelager 147A 147B.

Jeder der beiden Justierhebel 137A, 137B ist identisch ausgestaltet, wobei deren Aufbau insbesondere aus der Figur 2A ersichtlich ist. Das erste Ende 138 des Justierhebels 137 ist mit der Justierstelle 135 fest verbunden. Das zweite Ende 139 des Justierhebels 137 ist frei verschiebbar. Die Verschiebung des zweiten Endes 139 erfolgt parallel zur Zeichnungsebene der Figur 2A und mittels eines Stellelements in Form einer Justierschraube 128, welche zwischen dem feststehenden Parallelschenkel 122 und dem zweiten Ende 139 des Justierhebels 137 angeordnet ist. Der Justierhebel 137 weist einen elastischen Bereich 130 auf, welcher sich über eine Länge L erstreckt und wie eine Blattfeder wirkt. Durch eine Verschiebung des zweiten Endes 139 wird der elastische Bereich 130 gebogen und erzeugt ein Biegemoment, welches auf das Justierbiegelager 136 einwirkt und von diesem abgestützt wird. Infolge des Biegemoments um die Momentenachse 147 wird das Justierbiegelager 136 elastisch deformiert und es erfolgt eine von der Grösse des Biegemoments abhängige Verschwenkung der Justierstelle 135, wobei deren Drehpunkt das Justierbiegelager 136 mit deren Momentenachse 147 ist. Da das vierte Dünnstellenbiegelager 134 vom Justierbiegelager 136 beabstandet angeordnet ist, ändert dessen Position relativ zum feststehenden Parallelschenkel 122 und zu den anderen Dünnstellenbiegelagern 131, 132, 133 in Abhängigkeit des Schwenkwinkels des Justierbiegelagers 136. Die so erreichte Positionsänderung bewirkt schlussendlich die gewünschte Eckenlast-Einstellung.

In der Figur 2B ist ersichtlich, dass der Querschnitt und das Widerstandsmoment des elastischen Bereichs 130 deutlich kleiner sind als der Querschnitt und das Widerstandsmoment des Justierbiegelagers 136. Dies gilt sowohl für das erste Justierbiegelager 136A als auch für das zweite Justierbiegelager 136B.

In Figur 2C, welche die seitliche Ansicht in Blickrichtung Z der in der Figur 2A dargestellten Kraftübertragungsvorrichtung 110 zeigt ist erkennbar, dass eine erste Justierschraube 128A und eine zweite Justierschraube 128B vorhanden sind. Nach der Grobjustierung der Parallelführung 120 in der Längs- und Querrichtung mittels einer plastischen Deformation des ersten und zweiten Justierbiegelagers 136A, 136B, erfolgt die Feinjustierung der Parallelführung 120 mittels der ersten und zweiten Justierschraube 128A, 128B. Da grössere Abweichungen der Dünnstellenbiegelager 131, 132, 133, 134 in ihrer Lage zueinander bereits durch die plastische Deformation der Justierbiegelager 136A, 136B korrigiert worden sind, werden mittels der Feinjustierung nur noch sehr geringe Materialspannungen erzeugt, die kaum noch zu Drifterscheinungen des Wägesignals führen. Auch temperaturbedingte Längenänderungen der Justierschrauben werden durch die elastischen Bereiche so stark untersetzt, dass sie keine Auswirkungen auf den Eckenlastfehler haben.

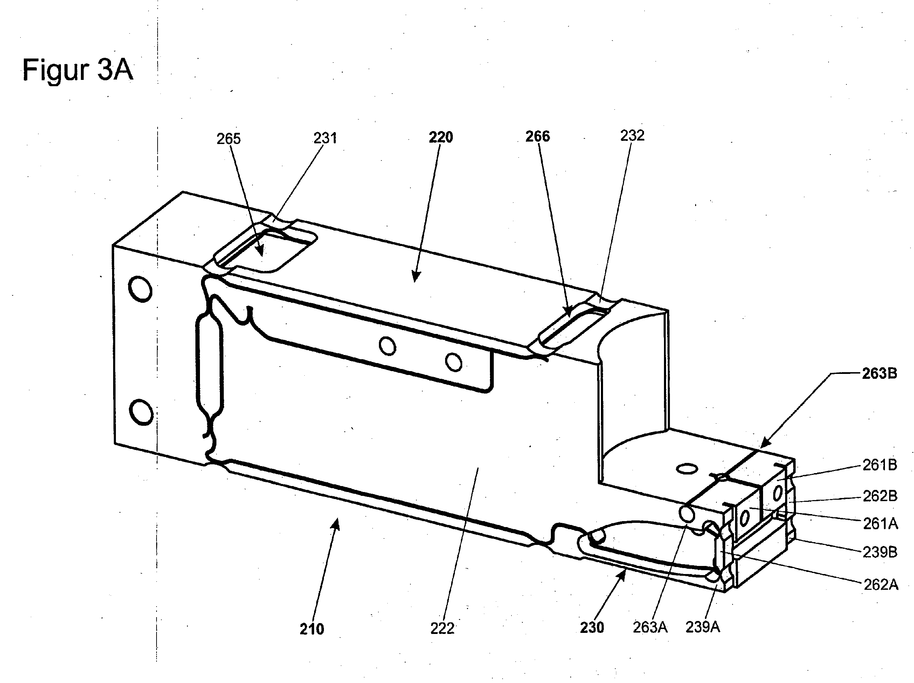

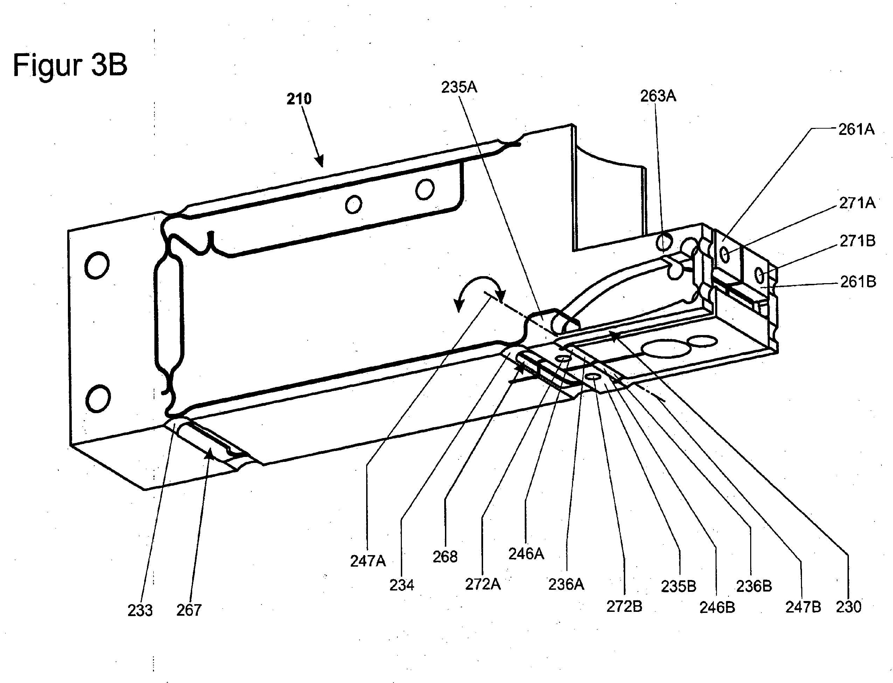

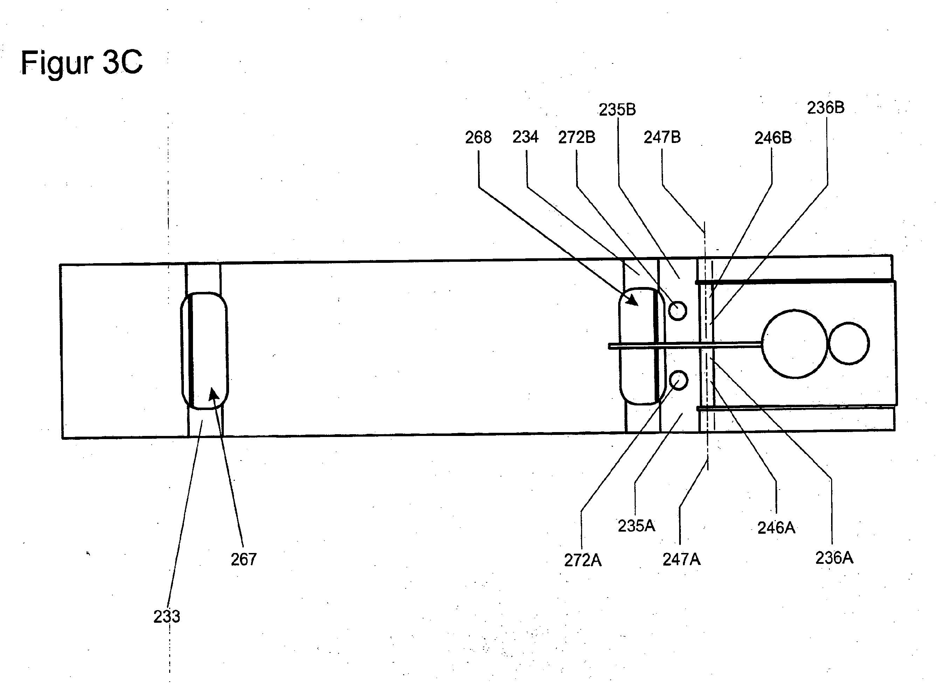

Die Figur 3A zeigt eine perspektivische Ansicht mit Blickrichtung auf die Oberseite und Seite einer Kraftübertragungsvorrichtung 210 mit einer erfindungsgemässen Parallelführung 220 in einer zweiten Ausführung. Die Figur 3B zeigt die perspektivische Ansicht mit Blickrichtung auf die Unterseite, und Figur 3C die Ansicht von Unten der in der Figur 3A dargestellten Kraftübertragungsvorrichtung 210. Nachfolgend werden alle drei Figuren 3A, 3B und 3C zusammen beschrieben.

Diese zweite Ausführung unterscheidet sich von der in den Figuren 1 und 2A bis 2C dargestellten ersten Ausführung nur darin, dass an Stelle eines Stellelements je ein Einstellbereich 261A,261B und ein Justierkoppelelement 262A, 262B angeordnet ist. Ferner sind in den Bereichen des ersten und zweiten Dünnstellenbiegelagers 231, 232 grosse Ausnehmungen 265, 266 sichtbar, damit die Dünnstellenbiegelager 231, 232 bei ihrer Auslenkung möglichst geringe Rückstellkräfte erzeugen.

Die Einstellbereiche 261A, 261B und die Justierkoppelelemente 262A, 262B sind durch Materialabtragungen vom feststehenden Parallelschenkel 222 abgegrenzte Stellglieder. Jeder Einstellbereich 261A, 261 B ist über ein Einstellbiegelager 263A, 263B mit dem feststehenden Parallelschenkel 222 verbunden. Durch plastische Deformation dieser Einstellbiegelager 263A, 263B wird eine bleibende Verschwenkung des Einstellbereichs 261A, 261B erzeugt, die wiederum eine bleibende Verschiebung des Justierkoppelelements 262A, 262B relativ zum feststehenden Parallelschenkel 222 bewirkt. Die Verschiebung des Justierkoppelelements 262A, 262B wird auf das Hebelende 239A, 239B übertragen und erzeugt analog zur Justierung mit einer Justierschraube ein vom elastischen Bereich 230 und der Verschiebung abhängiges Biegemoment, welches auf das in der Figur 3B einsehbare Justierbiegelager 236A, 236B einwirkt. So wird denn auch gleich das Justierbiegelager 236A 236B zum Schwenklager des Justierhebels 246A 246B, da das eingeleitete Biegemoment und das Justierbiegelager 236A 236B dieselbe Drehachse haben, nämlich die Momentenachse 247A 247B.

In der Figur 3B sind ferner in den Bereichen des dritten und vierten Dünnstellenbiegelagers 233, 234 grosse Ausnehmungen 267, 268 vorhanden, so dass auch diese Dünnstellenbiegelager 233, 234 bei ihrer Auslenkung möglichst geringe Rückstellkräfte erzeugen. Damit die Justierbiegelager 236A, 263B und die Einstellbiegelager 263A, 263B plastisch deformiert werden können, muss ein Biegemoment um die Momentenachse 247A, beziehungsweise 247B aufbringbar sein, welches die Biegefestigkeit des Materials im Biegelager übersteigt. Zu diesem Zweck weisen die Justierstellen 235A, 235B und Einstellbereiche 261A, 261B je eine Ansatzstelle 271A, 271B, 272A, 272B für ein Justierwerkzeug auf. Eine Ansatzstelle kann wie dargestellt, die Form einer zylindrischen Bohrung aufweisen.

Obwohl die Erfindung durch die Darstellung spezifischer Ausführungsbeispiele beschrieben worden ist, ist es offensichtlich, dass zahlreiche weitere Ausführungsvarianten geschaffen werden können, beispielsweise indem die Merkmale der einzelnen Ausführungsbeispiele miteinander kombiniert und/oder einzelne Funktionseinheiten der Ausführungsbeispiele ausgetauscht werden. So kann die erfindungsgemässe Justierstelle auch am beweglichen Parallelschenkel anstatt am feststehenden Parallelschenkel ausgebildet sein. Ferner ist die erfindungsgemässe Ausbildung der Justierstelle auch in gekapselten Wägezellen verwendbar, wie sie beispielsweise in der EP 2 120 023 A1 offenbart sind. Selbstverständlich kann die Parallelführung beziehungsweise Teile der Kraftübertragungsvorrichtung auch aus verschiedenen Einzelteilen zusammengesetzt sein und die erfindungsgemässe Eckenlasteinstellung aufweisen.

### Bezugszeichenliste

- 10: gravimetrisches Messinstrument
- 20: Lastaufnehmer
- 30: gehäusefeste Abstützung
- 40: Untergrund
- 100: Wägezelle
- 210, 110: Kraftübertragungsvorrichtung
- 112, 111: Trennschnitt
- 220, 120: Parallelführung
- 121: beweglicher Parallelschenkel
- 222, 122: feststehender Parallelschenkel
- 123: erster Parallellenker
- 124: zweiter Parallellenker
- 125: Mittelschnitt
- 127, 126: Hebeltrennschnitt
- 128B, 128A, 128: Stellelement, Justierschraube
- 230, 130: elastischer Bereich
- 231, 131: erstes Dünnstellenbiegelager
- 232, 132: zweites Dünnstellenbiegelager
- 233, 133: drittes Dünnstellenbiegelager
- 234, 134B, 134A, 134: viertes Dünnstellenbiegelager
- 235B, 235A, 135B, 135A, 135: Justierstelle
- 236B, 236A, 136B, 136A, 136: Justierbiegelager
- 137B, 137A, 137: Justierhebel
- 138: erstes Ende
- 239B, 239A, 139: zweites Ende
- 140: Kraftübertragungshebel
- 141: erster Hebelarm
- 142: zweiter Hebelarm
- 143: Hebelschwenklager
- 144: Koppelelement
- 145: Hebelarmverlängerung
- 246A, 246B, 146A, 146B, 146: Schwenklagerstelle des Justierhebels
- 247A, 247B, 147A, 147B, 147: Momentenachse des Justierbiegelager
- 150: Messaufnehmer
- 261B, 261A: Einstellbereich
- 262B,: 262A Justierkoppelelement
- 263B, 263A: Einstellbiegelager
- 268, 267, 266, 265: Ausnehmung
- 272B, 272A, 271B, 271A: Ansatzstelle

## Patentansprüche

1. Parallelführung (120, 220) mit einem beweglichen Parallelschenkel (121), einem feststehenden Parallelschenkel (122, 222), einem ersten Parallellenker (123) und einem zweiten Parallellenker (124), wobei die Parallelschenkel (121, 122, 222) und die Parallellenker (123, 124) durch Dünnstellenbiegelager (131, 231, 132, 232, 133, 233, 134, 134A, 134B, 234) miteinander verbunden sind, der bewegliche Parallelschenkel (121) durch die Parallellenker (123, 124) am feststehenden Parallelschenkel (122, 222) geführt ist und mindestens eine Justierstelle (135, 135A, 135B, 235A, 235B) mit einem Justierbiegelager (136, 136A, 136B, 236A, 236B) zwischen einem Dünnstellenbiegelager (131, 231, 132, 232, 133, 233, 134, 134A, 134B, 234) und einem Parallelschenkel (121, 122, 222) angeordnet ist, die Justierstelle (135, 135A, 135B, 235A, 235B) mit dem ersten Hebelende (138) eines Justierhebels (137, 137A, 137B) verbunden ist und das Justierbiegelager (136, 136A, 136B, 236A, 236B) die Schwenklagerstelle (146, 146A, 146B, 246A, 246B) des Justierhebels (137, 137A, 137B) bildet, **dadurch gekennzeichnet, dass** am Justierhebel (137, 137A, 137B) ein elastischer Bereich ausgebildet ist, dessen Widerstandsmoment kleiner ist als das Widerstandsmoment des Justierbiegelagers (136, 136A, 136B, 236A, 236B).

2. Parallelführung (120, 220) nach Anspruch 1, **dadurch gekennzeichnet, dass** zumindest die Justierstelle (135, 135A, 135B, 235A, 235B) und das Justierbiegelager (136, 136A, 136B, 236A, 236B) in zwei nebeneinander angeordnete erste und zweite Justierstellen (135A, 135B, 235A, 235B) mit einem ersten und zweiten Justierbiegelager (136A, 136B, 236A, 236B) geteilt sind, wobei die erste Justierstelle (135A, 235A) einen ersten Justierhebel (137, 137A) und die zweite Justierstelle (135B, 235B) einen zweiten Justierhebel (137, 137B) aufweisen.

3. Parallelführung (120, 220) nach Anspruch 2, **dadurch gekennzeichnet, dass** das Dünnstellenbiegelager (131, 231, 132, 232, 133, 233, 134, 134A, 134B, 234) zwischen dem Parallellenker (123, 124) und der ersten und zweiten Justierstelle (135, 135A, 135B, 235A, 235B) in ein erstes und zweites Dünnstellenbiegelager (131, 231, 132, 232, 133, 233, 134, 134A, 134B, 234) geteilt ist.

4. Parallelführung (120, 220) nach einem der Ansprüche 1 bis 3, **dadurch gekennzeichnet, dass** die mindestens eine Justierstelle (135, 135A, 135B, 235A, 235B) eine Ansatzstelle zum Ansetzen eines Justierwerkzeugs aufweist, mit dem deren Justierbiegelager (136, 136A, 136B, 236A, 236B) plastisch deformierbar ist.

5. Parallelführung (120,220) nach einem der Ansprüche 1 bis 4, **dadurch gekennzeichnet, dass** zwischen dem mit der Justierstelle (135, 135A, 135B, 235A, 235B) verbundenen Parallelschenkel (121, 122, 222) und dem zweiten Hebelende (139) des Justierhebels (137, 137A, 137B) ein Stellelement (128, 128A, 128B) anordenbar ist.

6. Parallelführung (120, 220) nach einem der Ansprüche 1 bis 4, **dadurch gekennzeichnet, dass** an dem mit der Justierstelle (135, 135A, 135B, 235A, 235B) verbundenen Parallelschenkel (121, 122, 222) ein Einstellbereich (261A, 261 B) mit einem plastisch deformierbaren Einstellbiegelager (263A, 263B) ausgebildet ist, welcher Einstellbereich (261A, 261B) mittels eines Koppelelementes (262A, 262B) mit dem zweiten Hebelende (139, 239A, 239B) des Justierhebels (137, 137A, 137B) verbunden ist.

7. Parallelführung (120, 220) nach Anspruch 6, **dadurch gekennzeichnet, dass** die Widerstandsmomente des Einstellbiegelagers (263A, 263B) und des Justierbiegelagers (136, 136A, 136B, 236A, 236B) gleich gross sind.

8. Kraftübertragungsvorrichtung (110, 210) mit einer Parallelführung (120, 220) nach einem der Ansprüche 1 bis 7 und mit mindestens einem am feststehenden Bereich schwenkbar gelagerten Kraftübertragungshebel (140), dessen erster Hebelarm (141) mit dem beweglichen Parallelschenkel (121) kraftübertragend verbunden ist.

9. Kraftübertragungsvorrichtung (110, 210) nach Anspruch 8, **dadurch gekennzeichnet, dass** die Parallelführung (120, 220) und der mindestens eine Kraftübertragungshebel (140) monolithisch ausgebildet sind.

10. Wägezelle (100) mit einer Kraftübertragungsvorrichtung (110, 210) nach Anspruch 9 und mit einem Messaufnehmer, welcher mit dem zweiten Hebelarm (142) des mindestens einen Kraftübertragungshebels (140) kraftübertragend verbunden ist.

11. Gravimetrisches Messinstrument (10) mit einer Wägezelle (100) nach Anspruch 10.

12. Verfahren zur Justierung der Parallelführung (120, 220) nach Anspruch 5, beziehungsweise eines gravimetrischen Messinstruments (10) nach Anspruch 11, **gekennzeichnet durch** die Schritte, dass
• der Längseckenlastfehler und der Quereckenlastfehler gemessen wird,
• ein Justierwerkzeug an der Ansatzstelle der mindestens einen Justierstelle (135, 135A, 135B, 235A, 235B) angesetzt wird,
• mittels des Justierwerkzeugs **durch** plastische Deformation des Justierbiegelagers (136, 136A, 136B, 236A, 236B) eine Vorjustierung der Parallelführung (120, 220) vorgenommen wird,
• Das Justierwerkzeug entfernt wird und
• mittels der am zweiten Hebelende (139, 239A, 239B) des Justierhebels (137, 137A, 137B) angreifenden Stellelements (128, 128A, 128B) eine Feinjustierung der Parallelführung (120, 220) vorgenommen wird.

13. Verfahren zur Justierung der Parallelführung (120, 220) nach einem der Ansprüche 6 oder 7, beziehungsweise eines gravimetrischen Messinstruments (10) nach Anspruch 11, **gekennzeichnet durch** die Schritte, dass
• der Längseckenlastfehler und der Quereckenlastfehler gemessen wird,
• ein Justierwerkzeug an der Ansatzstelle der mindestens einen Justierstelle (135, 135A, 135B, 235A, 235B) angesetzt wird,
• mittels des Justierwerkzeugs **durch** plastische Deformation des Justierbiegelagers (136, 136A, 136B, 236A, 236B) eine Vorjustierung der Parallelführung (120, 220) vorgenommen wird,
• Das Justierwerkzeug entfernt wird und
• mittels der am zweiten Hebelende(139, 239A, 239B) des Justierhebels (137, 137A, 137B) angreifenden Einstellbereichs (261A, 261B) eine Feinjustierung der Parallelführung (120, 220) vorgenommen wird.

## Claims

1. Parallel-guiding mechanism (120, 220) comprising a movable parallel leg (121), a stationary parallel leg (122, 222), a first parallel-guiding member (123) and a second parallel-guiding member (124), wherein the parallel legs (121, 122, 222) and the parallel-guiding members (123, 124) are connected to each other by flexure pivots (131, 231, 132, 232, 133, 233, 134, 134A, 134B, 234) in the form of narrow material connections, wherein the movable parallel leg (121) is constrained by the parallel-guiding members (123, 124) in guided movement relative to the stationary parallel leg (122, 222), and wherein at least one adjustment zone (135, 135A, 135B, 235A, 235B) with an adjustment flexure fulcrum (136, 136A, 136B, 236A, 236B) is arranged between a flexure pivot (131, 231, 132, 232, 133, 233, 134, 134A, 134B, 234) and a parallel leg (121, 122, 222), wherein the adjustment zone (135, 135A, 135B, 235A, 235B) is connected to the first lever end (138) of an adjustment lever (137, 137A, 137B), and wherein the adjustment flexure fulcrum (136, 136A, 136B, 236A, 236B) also forms the fulcrum (146, 146A, 146B, 246A, 246B) of the adjustment lever (137, 137A, 137B), **characterized in that** the adjustment lever (137, 137A, 137B) has an elastic domain whose section modulus is smaller than the section modulus of the adjustment flexure fulcrum (136, 136A, 136B, 236A, 236B).

2. Parallel-guiding mechanism (120, 220) according to claim 1, **characterized in that** at least the adjustment zone (135, 135A, 135B, 235A, 235B) and the adjustment flexure fulcrum (136, 136A, 136B, 236A, 236B) are divided into a first and a second adjustment zone (135A, 135B, 235A, 235B) with a first and a second adjustment flexure fulcrum (136A, 136B, 236A, 236B), wherein the first adjustment zone (135A, 235A) comprises a first adjustment lever (137, 137A) and the second adjustment zone (135B, 235B) comprises a second adjustment lever (137, 137B).

3. Parallel-guiding mechanism (120, 220) according to claim 2, **characterized in that** the flexure pivot (131, 231, 132, 232, 133, 233, 134, 134A, 134B, 234) is split into a first and second flexure pivot (131, 231, 132, 232, 133, 233, 134, 134A, 134B, 234) from the parallel-guiding member (123, 124) to the first and the second adjustment zone (135, 135A, 135B, 235A, 235B).

4. Parallel-guiding mechanism (120, 220) according to one of the claims 1 to 3, **characterized in that** the at least one adjustment zone (135, 135A, 135B, 235A, 235B) comprises an engagement feature to provide a grip for an adjustment tool whereby the respective adjustment flexure fulcrum (136, 136A, 136B, 236A, 236B) can be plastically deformed.

5. Parallel-guiding mechanism (120, 220) according to one of the claims 1 to 4, **characterized in that** an adjustment-setting element (128, 128A, 128B) can be arranged between the parallel leg (121, 122, 222) that is connected to the adjustment zone (135, 135A, 135B, 235A, 235B) and the second lever end (139) of the adjustment lever (137, 137A, 137B).

6. Parallel-guiding mechanism (120, 220) according to one of the claims 1 to 4, **characterized in that** an adjustment-setting area (261A, 261 B) with a plastically deformable adjustment-setting flexure pivot (263A, 263B) is formed on the parallel leg (121, 122, 222) that is connected to the adjustment zone (135, 135A, 135B, 235A, 235B), wherein said adjustment-setting area (261A, 261 B) is connected to the second end (139, 239A, 239B) of the adjustment lever (137, 137A, 137B) by means of a coupling element (262A, 262B).

7. Parallel-guiding mechanism (120, 220) according to claim 6, **characterized in that** the section moduli of the adjustment-setting flexure pivot (263A, 263B) and of the adjustment flexure fulcrum (136, 136A, 136B, 236A, 236B) are of equal magnitude.

8. Force-transmitting system (110, 210) with a parallel-guiding mechanism (120, 220) according to one of the claims 1 to 7, and with at least one force-transmitting lever (140) whose first lever arm (141) is tied to the movable parallel leg (121) through a force-transmitting connection.

9. Force-transmitting system (110, 210) according to claim 8, **characterized in that** the parallel-guiding mechanism (120, 220) and the at least one force-transmitting lever (140) are monolithically formed out of one piece.

10. Weighing cell (100) comprising a force-transmitting system (110, 210) according to claim 9 and also comprising a measurement transducer having a force-transmitting connection to the second lever arm (142) of the at least one force-transmitting lever (140).

11. Gravimetric measuring instrument (10) comprising a weighing cell (100) according to claim 10.

12. Method of adjusting the parallel-guiding mechanism (120, 220) according to claim 5, or a gravimetric measuring instrument (10) according to claim 11, **characterized by** the steps of
• measuring the lengthwise and transverse eccentric load errors,
• inserting an adjustment tool in the engagement feature of the at least one adjustment zone (135, 135A, 135B, 235A, 235B),
• pre-adjusting the parallel-guiding mechanism (120, 220) by plastically deforming the adjustment flexure fulcrum (136, 136A, 136B, 236A, 236B) with the adjustment tool,
• removing the adjustment tool, and
• fine-adjusting the parallel-guiding mechanism (120, 220) by means of the adjustment-setting element (128, 128A, 128B) which acts on the second lever end (139, 239A, 239B) of the adjustment lever (137, 137A, 137B).

13. Method of adjusting the parallel-guiding mechanism (120, 220) according to one of the claims 6 or 7, or a gravimetric measuring instrument (10) according to claim 11, **characterized by** the steps of
• measuring the lengthwise and transverse eccentric load errors,
• inserting an adjustment tool in the engagement feature of the at least one adjustment zone (135, 135A, 135B, 235A, 235B),
• pre-adjusting the parallel-guiding mechanism (120, 220) by plastically deforming the adjustment flexure fulcrum (136, 136A, 136B, 236A, 236B) with the adjustment tool,
• removing the adjustment tool, and
• fine-adjusting the parallel-guiding mechanism (120, 220) by means of the adjustment setting area (261A, 261 B) which acts on the second lever end (139, 239A, 239B) of the adjustment lever (137, 137A, 137B).

## Revendications

1. Guide parallèle (120, 220) avec une jambe parallèle mobile (121), une jambe parallèle immobile (122, 222), une première bielle parallèle (123) et une deuxième bielle parallèle (124), dans lequel les jambes parallèles (121, 122, 222) et les bielles parallèles (123, 124) sont reliées les unes aux autres par des paliers souples d'emplacement mince (131, 231, 132, 232, 133, 233, 134, 134A, 134B, 234), la jambe parallèle mobile (121) est guidée à travers les bielles parallèles (123, 124) sur la jambe parallèle immobile (122, 222), et au moins un point d'ajustement (135, 135A, 235A, 235B) avec un palier souple d'ajustement (136, 136A, 136B, 236A, 236B) est agencé entre un palier souple d'emplacement mince (131, 231, 132, 232, 133, 233, 134, 134A, 134B, 234) et une jambe parallèle (121, 122, 222), le point d'ajustement (135, 135A, 235A, 235B) étant relié à la première extrémité de levier (138) d'un levier d'ajustement (137, 137A, 137B), et le palier souple d'ajustement (136, 136A, 136B, 236A, 236B) formant le point de palier de pivotement (146, 146A, 146B, 246A, 246B) du levier d'ajustement (137, 137A, 137B), **caractérisé en ce que** sur le levier d'ajustement (137, 137A, 137B), il est prévu une région élastique, dont le couple de résistance est inférieur au couple de résistance du palier souple d'ajustement (136, 136A, 136B, 236A, 236B).

2. Guide parallèle (120, 220) selon la revendication 1, **caractérisé en ce qu'**au moins le point d'ajustement (135, 135A, 235A, 235B) et le palier souple d'ajustement (136, 136A, 136B, 236A, 236B) sont divisés en deux premier et deuxième points d'ajustement (135, 135A, 235A, 235B) agencés côte à côte, avec un premier et un deuxième palier souple d'ajustement (136, 136A, 136B, 236A, 236B), le premier point d'ajustement (135, 235A) comportant un premier levier d'ajustement (137, 137A) et le deuxième point d'ajustement (135B, 235B) comporte un deuxième levier d'ajustement (137, 137B).

3. Guide parallèle (120, 220) selon la revendication 2, **caractérisé en ce que** le palier souple d'emplacement mince (131, 231, 132, 232, 133, 233, 134, 134A, 134B, 234) est divisé en un premier et un deuxième palier souple d'emplacement mince (131, 231, 132, 232, 133, 233, 134, 134A, 134B, 234) entre la bielle parallèle (123, 124) et les premier et deuxième points d'ajustements (135, 135A, 235A, 235B).

4. Guide parallèle (120, 220) selon l'une des revendications 1 à 3, **caractérisé en ce que** l'au moins un point d'ajustement (135, 135A, 235A, 235B) présente un point de raccordement pour le raccordement d'un outil d'ajustement, avec lequel son palier souple d'ajustement (136, 136A, 136B, 236A, 236B) peut être déformé de façon plastique.

5. Guide parallèle (120, 220) selon l'une des revendications 1 à 4, **caractérisé en ce qu'**un élément de réglage (128, 128A, 128B) peut être agencé entre la jambe parallèle (121, 122, 222) reliée au point d'ajustement (135, 135A, 235A, 235B) et la deuxième extrémité de levier (139) du levier d'ajustement (137, 137A, 137B).

6. Guide parallèle (120, 220) selon l'une des revendications 1 à 4, **caractérisé en ce qu'**une région de réglage (261A, 261B) avec un palier souple de réglage (263A, 263B) est formée sur la jambe parallèle (121, 122, 222) reliée au point d'ajustement (135, 135A, 235A, 235B), ladite région de réglage (261A, 261 B) étant reliée à la deuxième extrémité de levier (139, 239A, 239B) du levier d'ajustement (137, 137A, 137B) au moyen d'un élément d'accouplement (262A, 262B).

7. Guide parallèle (120, 220) selon la revendication 6, **caractérisé en ce que** les couples de résistance du palier souple de réglage (263A, 263B) et du palier souple d'ajustement (136, 136A, 136B, 236A, 236B) sont identiques.

8. Dispositif de transmission de force (110, 210) avec un guide parallèle (120, 220) selon l'une des revendications 1 à 7 et avec au moins un levier de transmission de force (140) monté de façon pivotante sur la région immobile, dont le premier bras de levier (141) est relié avec transmission de force à la jambe parallèle mobile (121).

9. Dispositif de transmission de force (110, 210) selon la revendication 8, **caractérisé en ce que** le guide parallèle (120, 220) et l'au moins un levier de transmission de force (140) sont conçus en un seul bloc.

10. Cellule de pesage (100) avec un dispositif de transmission de force (110, 210) selon la revendication 9 et avec un capteur de mesure, lequel est relié avec transmission de force au deuxième bras de levier (142) de l'au moins un levier de transmission de force (140).

11. Instrument de mesure gravimétrique (10) avec une cellule de pesage (100) selon la revendication 10.

12. Procédé pour l'ajustement du guide parallèle (120, 220) selon la revendication 5, ou d'un instrument de mesure gravimétrique (10) selon la revendication 11, **caractérisé par** les étapes suivantes:
• mesure de l'erreur de charge de coin longitudinal et de l'erreur de charge de coin transversal,
• raccordement d'un outil d'ajustement au point de raccordement de l'au moins un point d'ajustement (135, 135A, 235A, 235B),
• pré-ajustement du guide parallèle (120, 220) au moyen de l'outil d'ajustement par déformation plastique du palier souple d'ajustement (136, 136A, 136B, 236A, 236B),
• éloignement de l'outil d'ajustement, et
• ajustement fin du guide parallèle (120, 220) au moyen de l'élément de réglage (128, 128A, 128B) touchant la deuxième extrémité de levier (139, 239A, 239B) du levier d'ajustement (137, 137A, 137B).

13. Procédé pour l'ajustement du guide parallèle (120, 220) selon l'une des revendications 6 ou 7, ou d'un instrument de mesure gravimétrique (10) selon la revendication 11, **caractérisé par** les étapes suivantes :
• mesure de l'erreur de charge de coin longitudinal et de l'erreur de charge de coin transversal,
• raccordement d'un outil d'ajustement au point de raccordement de l'au moins un point d'ajustement (135, 135A, 235A, 235B),
• pré-ajustement du guide parallèle (120, 220) au moyen de l'outil d'ajustement par déformation plastique du palier souple d'ajustement (136, 136A, 136B, 236A, 236B),
• éloignement de l'outil d'ajustement, et
• ajustement fin du guide parallèle (120, 220) au moyen de la région de réglage (261A, 261 B) touchant la deuxième extrémité de levier (139, 239A, 239B) du levier d'ajustement (137, 137A, 137B).
